Europäisches Patentamt

(19) European Patent Office

Office européen des brevets

(11) Numéro de publication: **0 074 897**
**B1**

(12) **FASCICULE DE BREVET EUROPEEN**

(45) Date de publication du fascicule du brevet:
**04.12.85**

(21) Numéro de dépôt: **82401644.8**

(22) Date de dépôt: **10.09.82**

(51) Int. Cl.⁴: **A 23 B 7/06**

(54) **Procédé amélioré de blanchiment de champignons et autres légumes.**

(30) Priorité: **11.09.81 FR 8117250**

(43) Date de publication de la demande:
**23.03.83 Bulletin 83/12**

(45) Mention de la délivrance du brevet:
**04.12.85 Bulletin 85/49**

(84) Etats contractants désignés:
**AT BE CH DE FR GB IT LI LU NL SE**

(56) Documents cités:
**EP - A - 0 021 629**
**BE - A - 727 145**
**FR - A - 2 197 531**
**FR - A - 2 317 887**
**FR - A - 2 421 566**
**FR - A - 2 489 097**
**US - A - 3 476 078**
**US - A - 3 843 810**

(73) Titulaire: **Spinoglio, Mario, 66 Bd des Anglais,
F-80200 Péronne (FR)**

(72) Inventeur: **Bournier, Edgard, Vascoeuil, F-27380 Fleury
sur Andelle (FR)**

(74) Mandataire: **Ranguis, Patrick Frédéric et al, Cabinet
Beau de Loménie 55, rue d'Amsterdam, F-75008 Paris
(FR)**

## Description

Le brevet français n° 2 197 531 décrit un procédé pour le traitement des champignons de Paris consistant à soumettre ceux-ci à un certain vide (par exemple, de l'ordre de 50 à 60 mm de mercure, soit aux environs de 6,6 · 10² Pa) puis à introduire un liquide d'imprégnation comportant un agent coagulant tel que le blanc d'oeuf, et enfin à soumettre les champignons imprégnés à un blanchiment qui permet la coagulation du liquide d'imprégnation. Cependant, outre le fait que le vide auquel les champignons sont soumis est insuffisant pour assurer un dégazage efficace, l'introduction du liquide d'imprégnation à température ambiante, sans refroidissement préalable, va provoquer un dégazage important de celui-ci, donc réduire le vide, et conduire à une imprégnation des champignons par ces gaz. Lors du blanchiment tous ces gaz encore présents dans les champignons vont avoir tendance à faire sortir le liquide d'imprégnation et conduire à un dégorgement important.

La présente invention concerne un procédé permettant de blanchir des champignons et autres légumes en améliorant les caractéristiques qualitatives et quantitatives du produit obtenu, en vue notamment de sa surgélation ou mise en conserve ultérieure.

Les produits alimentaires qui peuvent être traités selon l'invention sont notamment les champignons de Paris, les champignons sylvestres comme les girolles, cèpes ou morilles, les champignons cultivés comme les Pleurotes et Eudelis, ainsi que d'autres légumes comme les asperges, les artichauts, salsifis, carottes, les haricots verts et secs, les petits pois, céleri, endives, différents choux.

Il y a intérêt à mettre en oeuvre des produits refroidis de 0 à 2° centigrades et d'éviter leur réchauffement au cours des opérations de nettoyage des légumes. Le lavage sera avantageusement effectué avec de l'eau glacée. En outre ce lavage devra être réalisé de manière à réduire au maximum l'absorption de l'eau de lavage par exemple: par aspersion sous pression après nettoyage à sec sur table vibrante avec ventilation ce qui a pour but de réduire la durée du lavage.

Après nettoyage, lavage, parage et éventuellement calibrage et répartition par qualité, les produits subissent un refroidissement complémentaire à la limite de la température de congélation. Le produit ensuite introduit dans une enceinte dans laquelle on fait un vide poussé, de l'ordre de 1,32 · 10² à 6,6 · 10² Pa (1 à 5 mm Hg), le tout en maintenant la température précédente, c'est-à-dire à la limite de la congélation.

On procède ensuite à l'imprégnation du produit par un liquide d'imprégnation qui est lui-même refroidi à la température adéquate (afin qu'il ne se produise pas d'évaporation à la pression considérée). Cette imprégnation est obtenue par immersion dans ledit liquide puis par cassage du vide, cette dernière opération provoquant l'imprégnation proprement dite. Ces deux opérations vont être décrites en détail ci-dessous.

On procède tout d'abord à l'immersion sous vide du produit alimentaire dans le liquide d'imprégnation refroidi, qui contient un produit coagulant. De manière avantageuse ce produit coagulant est par exemple du blanc d'oeuf. La concentration en produit coagulant est de 4 à 25% environ en poids de matière sèche par rapport au liquide d'imprégnation, de préférence 6 à 12%.

A la suite de cette immersion, on peut procéder soit à une imprégnation unique, soit à une imprégnation partielle, soit à des imprégnations multiples.

L'imprégnation unique est obtenue par une remontée unique de la pression jusqu'à la pression atmosphérique ou une pression supérieure (2—15 bars ou 0,2—1,5 MPa), ce qui favorise et augmente la rapidité de l'imprégnation notamment pour des légumes tels que les carottes et les salsifis.

On peut également procéder avantageusement à des imprégnations partielles ou multiples.

Pour cela, après avoir fait le vide dans l'enceinte contenant le produit alimentaire, on maintient ce vide poussé et on effectue l'immersion dans un premier liquide de traitement à forte concentration en coagulant, par exemple 10 à 25% en poids de matière sèche. Le coagulant peut être du blanc d'oeuf.

On remonte ensuite la pression à une valeur intermédiaire, par exemple 0,050 MPa (500 mbars) ce qui provoque une première imprégnation par le liquide à forte concentration en coagulant. Sous cette pression intermédiaire, on évacue le liquide de traitement vers une enceinte réceptrice se trouvant sous la même pression. Il reste donc dans la première enceinte le produit alimentaire semi-imprégné, qui n'est pas entouré de liquide de traitement, et qui se trouve toujours sous la pression intermédiaire, par exemple 0,050 MPa (500 mbars). La remontée à la pression atmosphérique ou une pression supérieure donne une imprégnation partielle, mais alternativement, on peut admettre un second liquide d'imprégnation dont la concentration en coagulant est de 0 à 4% environ en poids de matière sèche. Il peut donc s'agir soit d'eau soit d'une solution très peu concentrée en agent coagulant; celui-ci peut d'ailleurs provenir du résidu du premier liquide d'imprégnation adhérant aux légumes.

On remonte ensuite la pression jusqu'à la pression atmosphérique ou à une pression supérieure ce qui réalise la seconde imprégnation.

Dans ces opérations multiples, on peut utiliser dans les différents stades soit toujours le même agent coagulant, soit deux agents coagulants différents. Dans le premier stade, l'agent coagulant sera par exemple le blanc d'oeuf tandis que dans le second stade l'agent coagulant pourra être un amidon ou une matière protéique d'origine animale (albumine du lait, extraits sanguins, etc.) ou végétale (par exemple protéine du soja, etc.).

On peut par exemple prévoir à titre de variante une première imprégnation sous une pression intermédiaire (par exemple 0,050 MPa ou 500 mbars) en utilisant l'albumine comme agent coagulant, puis une seconde imprégnation sous une pression égale ou supérieure à la pression atmosphérique en utilisant une autre protéine moins onéreuse.

A titre de variante supplémentaire on peut effectuer une première imprégnation sous une pression intermédiaire (par exemple 0,050 MPa ou 500 mbars) en utilisant le blanc d'oeuf comme agent coagulant, puis une seconde imprégnation sous une seconde pression intermédiaire (par exemple 0,075 MPa ou 750 mbars) en utilisant un autre agent coagulant, puis enfin une imprégnation finale par de l'eau sous la pression atmosphérique ou supérieure.

En ce qui concerne le liquide d'imprégnation, on notera qu'il est intéressant d'effectuer un salage (chlorure de sodium) représentant de 2 à 10% en poids du liquide. Ceci présente deux avantages importants: tout d'abord, ceci permet de pouvoir utiliser le liquide sous une température inférieure à 0°C, ce qui empêche toute vaporisation et donc toute remontée de la pression; de plus, ce salage réduit de manière importante (réduction pouvant atteindre 40% en poids), la quantité de liquide absorbé. Dans la mesure où la législation l'autorise, les imprégnations pourraient comporter des adjuvants, en particulier: des polyphosphates, des citrates, des carbonates de soude, et/ou de potasse, adjuvants dont on a pu vérifier l'action favorable pour l'hydratation des légumes ayant une teneur notable en matières azotées comme dans les champignons par exemple.

Après ce traitement d'imprégnation, qu'il s'agisse de l'imprégnation unique ou des imprégnations multiples, on se trouve en présence d'un produit alimentaire imprégné que l'on doit encore traiter par différents processus avant de le mettre en état de conservation finale. Ces processus seront des processus de blanchiment-coagulation qui seront décrits en détail dans ce qui suit.

Cependant, entre l'imprégnation et ces processus ultérieurs, les produits alimentaires du type »racine« comme les salsifis et les carottes, et notamment les salsifis, peuvent être soumis à un traitement supplémentaire spécial. On sait en effet que ces légumes doivent subir un pelage notamment à la vapeur ou à la soude. Ce pelage, dans les processus classiques, conduit à une perte importante en poids. Il a été découvert selon l'invention que l'on pouvait réduire de manière surprenante les inconvénients du pelage. Pour ce faire, les légumes considérés, notamment les salsifis, qui, à la sortie de l'étape d'imprégnation, se trouvent toujours à une température très basse limite de la congélation, subissent un refroidissement supplémentaire jusqu'a la congélation. On a constaté que le pelage qui était ensuite effectué provoquait une perte de poids plus faible et une moindre détérioration de la structure du légume, dont l'amélioration est due au procédé selon l'invention.

Il a de plus été constaté que ces avantages étaient conservés jusqu'au produit final.

A titre de variante, il est encore possible d'effectuer la ou les étape(s) d'imprégnation sous ultra-sous. Des résultats favorables ont été obtenus notamment sur les champignons à des fréquences voisines de 50 kHz.

Ceci est valable que le liquide d'imprégnation soit de l'eau, ou contienne un ingrédient tel que décrit ci-dessus, quel que soit celui-ci.

On a noté que, lorsque l'on utilise un ingrédient, notamment l'amidon, on évitait sa sédimentation, mais aussi que, dans tous les cas, on favorisait nettement l'imprégnation et que cette imprégnation était par ailleurs plus homogène.

Après l'étape d'imprégnation, in peut de plus maintenir les légumes sous ultra-sons (les légumes étant toujours immergés dans le liquide d'imprégnation). Ainsi, on accélère notablement la réaction d'hydratation et on échappe ainsi à des dégradations de type enzymatique (développement de taches, etc.).

Il est très intéressant d'effectuer un stockage sous ultra-sons des légumes immergés, en particulier champignons et racines comme les salsifis, entre l'imprégnation et la coagulation-blanchiment. On observe alors un meilleur dégazage, une homogénéisation du liquide de traitement, et une amélioration de la vitesse et de la régularité d'imprégnation. On accélère aussi les réactions d'hydrolyse. Le temps de stockage peut être ainsi réduit par rapport aux durées pratiquées sans ultra-sons. Ainsi, sous ultra-sons, le temps de stockage pourra être de seulement 1 à 3 h à 20°C ou 24 h à 0/+5°C.

On évite ainsi les évolutions bactériennes et enzymatiques qui dégradent la qualité et que l'on doit combattre par $SO_2$ sous forme de bisulfite de soude, tout en améliorant le rendement.

On décrira dans ce qui suit les processus annoncés plus haut de coagulation-blanchiment.

Les produits alimentaires qui ont subi l'imprégnation et éventuellement le traitement supplémentaire décrit ci-dessus pour les salsifis et les carottes notamment, doivent subir un traitement de coagulation-blanchiment. Ce traitement thermique est effectué selon l'invention, de manière préférée, en deux étapes:

a)  on effectue tout d'abord un traitement à température élevée qui conduit à une coagulation superficielle très rapide en raison du choc thermique subi par le légume. Le temps de traitement est de quelques secondes à une minute, et on opère par exemple par immersion dans de l'huile à 130°C environ, durant environ 20 sec. ou dans de la saumure saturée à l'ébullition durant environ 30 sec. ou dans de l'eau surchauffée à 130°C (ce qui implique une légère surpression) durant environ 20 sec., soit encore dans un gaz chaud comme l'air ou l'azote porté à une température comparable. Dans ce dernier cas, il se produit un séchage superficiel, favorable à la rétention des sucs grâce à la formation d'un film surfacique.

b) On effectue ensuite une coagulation profonde qui s'accompagne du phénomène de blanchiment par la poursuite du traitement thermique à une température plus faible de l'ordre de 65 à 90°C, durant 8 à 10 min.

A titre de variante, on peut également provoquer la coagulation superficielle par différents moyens dont certains ne sont pas thermiques:

1) On peut effectuer un traitement par infrarouge qui provoque une coagulation superficielle (on peut d'ailleurs faire suivre ce traitement par un traitement aux micro-ondes qui provoque la coagulation profonde).

2) On peut effectuer une coagulation enzymatique en particulier si l'agent coagulant superficiel est un dérivé du lait (l'enzyme peut alors être du type presure; dans ce cas également, si l'on prolonge ce traitement enzymatique, on peut atteindre une coagulation profonde par un phénomène de propagation).

3) On peut également provoquer la coagulation superficielle par trempage dans un bain acide (acide acétique, citrique, ou chlorydrique, etc., à pH inférieur à 3), le temps de traitement étant de quelques secondes à une minute suivant l'agent de traitement considéré; on peut faire suivre éventuellement ce traitement par un traitement aux micro-ondes qui conduit à la coagulation profonde.

Dans tous les cas ci-dessus, c'est-à-dire que que soit le procédé utilisé et quel que soit le stade auquel on s'est arrêté (coagulation superficielle ou coagulation profonde) on fait ensuite en général suivre ces opérations par un blanchiment classique de 8 à 10 min. à une température de 65 à 90°C environ. Pour certains légumes comme les carottes, les salsifis, les haricots verts, les petits pois, le blanchiment peut être réduit.

Quelles que soient les techniques de coagulation-blanchiment utilisées parmi les diverses variantes énoncées ci-dessus, le produit alimentaire ainsi traité est ensuite soumis soit à une surgélation, soit à un conditionnement suivi d'une stérilisation ou pasteurisation classique avec refroidissement ultérieur, soit encore à d'autres procédés de conservation par exemple par rayonnements ionisants.

Dans tous les cas on constate une amélioration notable aussi bien au niveau quantitatif (perte de poids réduite) qu'au niveau qualitatif (moins de perte d'arôme et de matières utiles).

A titre de variante préférée des opérations de coagulation-blanchiment que l'on effectue à la suite des processus d'imprégnation sous vide à basse température, on indiquera que l'on effectue de manière tout à fait avantageuse toutes les opérations thermiques sous une surpression de 0,2 à 1,5 MPa (2 à 15 bars) environ.

Si l'on reprend les divers processus possibles de coagulation-blanchiment qui ont été décrits ci-dessus, on effectue donc sous pression les coagulations à chaud et le blanchiment ultérieur, ainsi que le refroidissement qui fait suite au blanchiment. L'une des manières de procéder peut être la suivante: on introduit dans une enceinte que nous appellerons »hyperbar«, et qui comporte un système de chauffage, des légumes à traiter.

Pour obtenir la pression retenue pour le traitement, par exemple 10 bars ou 1 MPa, on introduit ensuite de l'air comprimé ou de l'azote.

Par gravité ou par pompe on introduit instantanément le fluide de coagulation, préalablement chauffé à la température retenue, par exemple 130°C. Le système de chauffage du blancheur maintient cette température pendant le temps de coagulation, par exemple 30 sec.

Le temps de coagulation achevé, on vidange par gravité ou par pompe, on évacue le liquide à 130°C et dès la fin de la vidange on introduit le liquide de blanchiment, par exemple de l'eau à 80°C, et on maintient cette température pendant six minutes par exemple, puis on vidange toujours par gravité ou par pompe et dès la fin de la vidange on introduit de l'eau froide à 15°C par exemple.

Pendant toute la durée du refroidissement on maintiendra la pression en jouant sur la pression de l'air et l'entrée et la sortie de l'eau de refroidissement. La durée de refroidissement est fonction de la taille des produits.

Il est possible de raccourcir le temps de refroidissement en terminant le refroidissement avec de l'eau glacée.

Après le refroidissement contrôlé par un thermocouple placé dans le produit, l'eau est évacuée et le blancheur décompressé; les légumes sont ensuite extraits du blancheur.

Dans le cas où la coagulation par choc thermique n'est pas nécessaire, on introduit tout de suite le liquide de blanchiment.

On effectue ensuite la préparation classique avant le conditionnement (triage, calibrage, émincage, contrôle, etc.) et le conditionnement lui-même (en boîtes métalliques ou plastiques, en emballages souples, ou en complexes métallo-plastiques comme par exemple aluminium-polyamide) adapté pour subir les effets de pression externe qu'il devra subir ensuite. En effet, on effectue les étapes ultérieures de stérilisation (120–150°C) ou de pasteurisation (95 à 100°C), et de refroidissement ultérieur sous la même surpression 0,2 à 1,5 MPa (2 à 15 bars). Par surpression il faut entendre que par exemple, lors d'une stérilisation à 130°C, la pression absolue normale est de 0,3 MPa (3 bars) et que par conséquent selon l'invention on travaille sous 0,5 à 1,8 MPa (5 à 18 bars).

De cette manière, c'est-à-dire en travaillant sous pression pour toutes les opérations thermiques de coagulation-blanchiment, et stérilisation ou pasteurisation, on améliore encore les résultats obtenus selon l'invention. C'est-à-dire que l'on diminue encore plus les pertes de poids par exsudation et que l'on constate un passage encore plus faible de matières utiles dans le jus.

## Revendications

1. Procédé de traitement de légumes en vue de leur préparation à la conservation consistant à les imprégner sous vide avec un liquide de traitement comportant un agent coagulant puis à leur faire subir un blanchiment thermique, ledit procédé étant caractérisé en ce qu'il comporte les étapes suivantes:
— refroidissement de 0 à +2°C environ,
— lavage ménagé avec de l'eau glacée et parage,
— refroidissement complémentaire à la température limite de congélation,
— mise dans une enceinte dans laquelle on fait un vide compris entre 1,32 · 10² et 6,6 · 10² Pa, à la température précitée,
— immersion dans au moins un liquide de traitement contenant un agent coagulant refroidi à une température telle qu'il ne se produise pas d'évaporation à la pression considérée, puis remontée en pression en un ou plusieurs stades pour réaliser une imprégnation du légume, à la même température,
— traitements thermique de coagulation-blanchiment.

2. Procédé selon la revendication 1, caractérisé en ce que le liquide de traitement comporte du chlorure de sodium représentant 2 à 10% du liquide, en poids.

3. Procédé selon la revendication 1, caractérisé en ce que la coagulation-blanchiment est effectuée en deux stades:
1) à une température de l'ordre de 130°C;
2) à une température comprise entre 65 et 90°C.

4. Procédé selon la revendication 1, caractérisé en ce que la coagulation-blanchiment est effectuée:
— par traitement infra-rouge; ou
— par trempage en bain acide (à pH <3); ou
— par coagulation enzymatique, ce premier traitement étant suivi par un blanchiment thermique de 8—10 min. à 65—90°C.

5. Procédé selon l'une quelconque des revendications 1 à 4, caractérisé en ce que les opérations thermiques de la coagulation-blanchiment sont effectuées sous une surpression de 0,2 à 1,5 MPa.

6. Procédé selon la revendication 1, caractérisé en ce que les produits alimentaires du type »racine« subissent, avant l'étape de coagulation-blanchiment, un refroidissement supplémentaire jusqu'à la congélation puis, un pelage.

## Patentansprüche

1. Verfahren zur Behandlung von Gemüsen zwecks Haltbarkeitsmachens derselben, bei welchem diese unter Vakuum mit einer Behandlungsflüssigkeit, enthaltend ein Koagulationsmittel, imprägniert und danach einer Wärmebleichung unterzogen werden, welches Verfahren dadurch gekennzeichnet ist, daß es die folgenden Schritte umfaßt:
— Abkühlung auf etwa 0 bis +2°C,
— Schonwäsche mit Eiswasser und Zurichten,
— zusätzliches Abkühlen bis zur Gefriergrenztemperatur,
— Anordnung in einem Gehäuse, in dem ein Vakuum zwischen 1,32 · 10² und 6,6 · 10² Pa hergestellt wird, bei der vorgenannten Temperatur,
— Eintauchen in zumindest eine Behandlungsflüssigkeit, die ein Koagulationsmittel enthält, welches auf eine Temperatur gekühlt ist, so daß keine Verdampfung beim betreffenden Druck auftritt, danach neuerlicher Druckanstieg in einem oder mehreren Stadien zur Realisierung einer Imprägnierung des Gemüses bei derselben Temperatur,
— Koagulations-Bleichungs-Wärmebehandlungen.

2. Verfahren nach Anspruch 1, dadurch gekennzeichnet, daß die Behandlungsflüssigkeit Natriumchlorid enthält, welches 2 bis 10 Gew.-% der Flüssigkeit ausmacht.

3. Verfahren nach Anspruch 1, dadurch gekennzeichnet, daß die Koagulation-Bleichung in zwei Stadien durchgeführt wird:
1) bei einer Temperatur im Bereich von 130°C;
2) bei einer Temperatur zwischen 65 und 90°C.

4. Verfahren nach Anspruch 1, dadurch gekennzeichnet, daß die Koagulation-Bleichung bewirkt wird:
— durch Infrarotbehandlung; oder
— durch Eintauchen in ein saures Bad (pH <3); oder
— durch enzymatische Koagulation, wobei diese erste Behandlung von einer Wärmebleichung bei 65 bis 90°C während 8 bis 10 min gefolgt wird.

5. Verfahren nach einem der Ansprüche 1 bis 4, dadurch gekennzeichnet, daß die Wärmevorgänge der Koagulation-Bleichung unter einem Überdruck von 0,2 bis 1,5 MPa durchgeführt werden.

6. Verfahren nach Anspruch 1, dadurch gekennzeichnet, daß die »wurzelartigen« Nahrungsmittel vor der Koagulations-Bleichungs-Stufe einer zusätzlichen Abkühlung bis zum Gefrieren und dann einer Zurichtung unterzogen werden.

## Claims

1. Process for treating vegetables with the view to preparing them for preserves, consisting in impregnating them under vacuum with a treating liquid comprising a coagulating agent, then subjecting them to a thermal scalding, said process being characterized in that it comprises the following steps:

— cooling down from about 0 to +2° C,
— gentle washing with ice water and trimming,
— complementary cooling to the limit freezing temperature,
— placing in an enclosure in which a vacuum comprised between $1.32 - 10^2$ and $6.6 - 10^2$ Pa, is created, at the above temperature,
— immersing in at least one treating liquid containing a coagulating agent cooled down to a temperature such that no evaporation occurs at the considered pressure, then rising the pressure in one or more stages to perform an impregnation of the vegetable, at the same temperature,
— thermal treatment of coagulation-scalding.

2. Process according to claim 1, characterized in that the treating liquid comprises sodium chloride representing from 2 to 10% of the liquid, by weight.

3. Process according to claim 1, characterized in that the coagulation-scalding is carried out in two steps:
1) at a temperature of about 130° C,
2) at a temperature between 65 and 90° C.

4. Process according to claim 1, characterized in that the coagulation-scalding is carried out:
— by infra-red treatment; or
— by soaking in acid bath (of pH <3); or
— by enzymatic coagulation, said first treatment being followed by a thermal scalding for 8 to 10 min. at 65—90° C.

5. Process according to any one of claims 1 to 4, characterized in that the thermal operations of coagulation-scalding are carried out under an overpressure of 0.2 to 1.5 MPa.

6. Process according to claim 1, characterized in that the food products of »root« type are subjected, before the step of coagulation-scalding, to an additional scalding until freezing, then to a peeling.